# EUROPEAN PATENT SPECIFICATION

(11) **EP 4 362 426 B1**
(45) Date of publication and mention of the grant of the patent: **02.09.2026**
(21) Application number: 23206527.6
(22) Date of filing: 27.10.2023
(51) Int. Cl.: H04L 67/104, H04L 67/1074, H04L 67/568, H04L 67/289

(54) **HOME CONTENT DELIVERY NETWORK**
HEIMNETZWERK FÜR DIE BEREITSTELLUNG VON INHALTEN
RÉSEAU DOMESTIQUE DE DIFFUSION DE CONTENU

(30) Priority: 31.10.2022 IL 29783522
(43) Date of publication of application: 01.05.2024
(73) Proprietor: Deutsche Telekom AG, 53113 Bonn (DE)
(72) Inventor: ELOVICI, Yuval, 7986400 Arugot (IL); BRODT, Oleg, 8471621 Beer Sheva (IL); SHABTAI, Asaf, 7684200 Hulda (IL); MIMRAN, David, 6215505 Tel Aviv (IL); PUZIS, Rami, 7748707 Ashdod (IL)
(74) Representative: Schmidt, Christian

(56) References cited:
- US-A1- 2011 238 828
- US-A1- 2012 096 121
- JIANGCHUAN LIU ET AL: "On peer-to-peer client web cache sharing", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 1, 16 May 2005 (2005-05-16), pages 306 - 310, XP010827527, ISBN: 978-0-7803-8938-0, DOI: 10.1109/ICC.2005.1494366

## Description

### Field of the Invention

The present invention relates to the field of content delivery over data networks. More particularly, the present invention relates to an efficient home Content Delivery Network (CDN).

### Background of the Invention

There can be multiple devices connected to a home network, such as laptops, smartphones, tablets, gaming consoles, desktops and others, where at any point in time, each device has different storage capabilities, as well as different available bandwidth. Each device may also involve a different user activity, different level of energy left, different amount of free storage, a different storage consumption profile and other factors, which create a dynamic combination of resources that are changing over time. Considering different media consumption scenarios, there is a lot of "wasted" pool of resources residing idly on the plethora of devices available at home.

Currently, each home user downloads his content independently of other home users. This approach creates several problems:
First, this situation creates unnecessary redundancies. The same data is being downloaded multiple times from the internet, which is inefficient.

Second, the necessity to download a remote asset, instead of downloading it from a distance of several meters away, leads to degradation in the quality of service that the home users experience. Instead of taking the shortest path to download the media asset in a Local Area Network (LAN - which is typically much faster than the Wide Area Network (WAN) line), the users are forced to take the long and slow route.

Third, this inefficiency leads to unnecessary load on the internet service provider (ISP) network and increases costs. Instead of the home users sharing content with each other, they are forced to utilize their WAN line in redundant queries. As a consequence, a large portion of the data flowing in the ISP network is redundant. Solving this redundancy can alleviate the traffic congestion on the ISP side, by using an efficient and cheap solution, instead of investing in additional core network equipment to serve unnecessary data traffic.

Fourth, each transmitted byte has carbon footprint, and leaving such a footprint without a reason is unjustified, contributing to global warming and therefore, this redundancy also harms the environment.

Fifth, there are unused resources, such as media assets, bandwidth, storage, etc., scattered across the household.

Even though each user uses the internet in a special and private manner, the browsing habits of an average family at home show high overlap among internet destinations. Accordingly, there is a high chance that family members will be watching the same news, media, and entertainment websites at different times. For every visited website, there are hundreds of files that are downloaded behind the content scenes. This allows obtaining a smooth experience. These two facts indicate a significant waste of internet resources at home and if they are multiplied across the globe, the numbers are getting very high.

US 2011/0238828 discloses a method for establishing a peer group for sharing Web cache data among a set of computing devices through a peer-to-peer network. The Web cache data is used by each of the computing devices to respond to requests issued over a client-server network from a Web browser running on that computing device. Web cache data can be exchanged among the peers of the peer group via the peer-to-peer network. A server associated with a client request issued from a Web browser of one of the computing devices may never provide the Web content responsive to the client request, which is obtained instead from the different one of the computing devices.

US 2012/0096121 discloses a method whereby a device receives, from a user device, a request for content from a home network, and sends a notification of the request for content to a home network device. The device receives, from the home network device, a selection list of particular content, provides, to the user device, the selection list, and receives, from the user device, a content selection from the selection list. The device sends, to the home network device, the content selection, and receives, from the home network device, an indication that content corresponding to the content selection has been uploaded to a content delivery network. The device sends, to the user device, instructions to retrieve the content from the content delivery network.

J. Liu et al in "On peer-to-peer client web cache sharing", Communications, 2005, vol. 1, 16 May 2005, p. 306-310 discloses a peer-to-peer client web caching system in which end-hosts collectively share their web cache contents. An opinion-based sampling technique is employed to minimize the chance of distributing forged copies from malicious nodes.

It is therefore an object of the present invention to provide a system and method for matching between unused suppliers resources and consumers, on demand, to increase the overall consumers' internet consumption experience.

It is therefore an object of the present invention to provide a system and method for transforming the CDN concept into the home landscape, while keeping a high level of security, availability and convenience of use.

Other objects and advantages of the invention will become apparent as the description proceeds.

### Summary of the Invention

A method carried out by a computerized device for on demand matching between unused supplier resources and consumers, comprising:
a) establishing a single local WiFi network, by creating a connection among trusted devices with a resilient and trusted ad-hoc Peer-To-Peer, P2P, communication protocol across connected device nodes for sharing browsed content among an ad-hoc group of connected devices, using WiFi networking capabilities of said connected devices;
b) optimizing internet consumption across browser based sessions while considering usage of standalone browsers, or browser modules utilized by native applications;
c) replicating browser cache assets of participating trusted devices, based on usage patterns and top internet destinations; and
d) refreshing browser shared cache assets in idle time for utilizing bandwidth across said ad hoc group,
wherein the browser cache assets of the participating trusted devices are replicated by being additionally based an amount of energy left on each of the participating devices, whether each of the participating devices is in a charging mode or is continuously connected to an outlet, and a minimum required number of participating devices for maintaining availability and redundancy of a replicating operation.

In one aspect, the connected devices are selected from the group of smartphones, tablets, PCs.

In one aspect, each of the participating devices acts according to an identified functionality without sharing browsed content if a user is not at home.

In one aspect, the connected devices associated with the single WIFI network are used by family members forming a family group of the devices, and a file downloaded on one of the devices will not be shared with other family members if no one else in the family has browsed a website before from which the file was downloaded.

In one aspect, an internet experience optimization ratio over a predetermined period of time is measured by monitoring a performance of the trusted devices participating in Home CDN vs. the devices that are not connected to a local network.

In one aspect, the internet experience optimization ratio across multiple local networks setups is measured.

A data processing system comprising a processor for on demand matching between unused suppliers resources and consumers is adapted to perform the steps of the method.

In one aspect, the system comprises:
a) a discovery component, installed on said computerized device having at least one processor, adapted to:
   a.1) continuously monitor WiFi networking and searching for known and new devices and consider said devices for suitability to join the local network;
   a.2) for known devices that currently are not in the local network, trigger a handshake protocol for verifying the trust of the device via Trusted Device Verification;
   a.3) upon detecting that a known device joins the local network, initiating refreshing and replication of distributed tasks of assets discovery;
   a.4) probe for an unknown device to verify whether an agent software is running on said device and if it is, trigger a process of new device trust verification, where users in the local network need to approve the device;
b) a Trusted Device Verification Component, installed on said computerized device and being adapted to:
   b.1) record a list of trusted devices that have joined the local network and their MAC addresses, as an ID;
   b.2) verify the trust of a known node in the local network entering a new node into the trusted group;
   b.3) allow a UX capability to manage the list of trusted devices and blacklists;
   b.4) manage a live list of nodes that are connected at a certain point in time, a history of devices that were forming groups in the past, and exceptions that occur of devices that were rejected and gained trust;
c) a Quality of Service Monitoring Component, installed on said computerized device, which is adapted to:
   c.1) continuously run and monitor local connectivity and storage patterns of the local network and act as an input source for different tasks that require quality of service-based decisions;
   c.2) record a historic performance of resources, as well as a hit/miss ratio on the browser cache assets, for evaluating performance impact on a consumer internet experience; and
d) a Distributed Task Scheduler Component, installed on said computerized device, being a plain distributed task scheduler based on Deep Reinforcement Learning (DRL) that is adapted to:
   d.1) manage the nodes across different computing environments;
   d.2) schedule, execute and monitor the tasks across one or more nodes;
   d.3) autonomously learn the best resource allocation given the predefined policy that includes different QoS requirements, privacy requirements, available resources, and predicted content consumption.

In one aspect, the system further comprises:
a) a Top Sites and Usage based Assets Discovery component, installed on said computerized device, which is adapted to:
   a.1) maintain an index of media assets that are shared across different devices, as well as media assets belonging to a list of top websites;
   a.2) maintain device privacy by discarding assets that are unique to a specific device or assets protected by authentication schemes;
   a.3) maintain the index as a distributed list available and in sync across the devices;
   a.4) trigger a distributed task, based on a timetable or changes in the caching folder of one of the devices;
b) a Cache Refresher and Replicator component, installed on said computerized device, that includes a set of distributed tasks and is adapted to:
   b.1) handle selective cache assets refreshed from the internet;
   b.2) handle selective cache assets replication across the devices;
   b.3) trigger distributed task upon detecting a change in the assets index, while considering the level of connectivity and load constraints of specific devices that are destined to execute the distributed task.

A computer program product comprises instructions which, when the program is executed by a computer, cause the computer to carry out the method.

### Brief Description of the Drawings

The above and other characteristics and advantages of the invention will be better understood through the following illustrative and non-limitative detailed description of preferred embodiments thereof, with reference to the appended drawings, wherein:
- Fig. 1 schematically illustrates an example of an ad-hoc Peer-To-Peer (P2P) network that comprises a tablet, a smartphone and a desktop computer, each with storage and connectivity capabilities; and
- Fig. 2 illustrates the items shared by the connected devices of Fig. 1.

### Detailed Description of the Present Invention

The present invention proposes a system and method for matching between unused suppliers resources and consumers, on demand, to increase the overall consumers' internet consumption experience. This is done by investigating, following a permission by each user, how to pool resources such as bandwidth and storage across home devices. Eventually, each device will define the amount of storage and the ratio of bandwidth allocated to a home CDN.

### Sharing data and media assets across home users

According to the present invention, once a certain user requires a certain media asset located on the internet, an intelligent coordinator of tasks will orchestrate the acquisition of the media asset in the most optimized manner. Optimization will consider the availability of bandwidth and internet access level on the different devices.

The usage profile of the devices may risk such operation (for example, if someone is leaving home). The method proposed by the present invention considers the amount of energy left on the device, whether or not the device is in charging mode or maybe continuously connected to an outlet, and the minimum required participants for maintaining availability and redundancy of the operation.

Data should be provided in a confidential manner, so other non-eligible consumers will not able to access the media, unless it was deemed as public (for example, a YouTube video). During media consumption, an intelligent media locator and consumer will manage the identification of the location of media fragments, the state of consumption by the user for continuous operation across devices, as well as the decision making regarding how long to keep the media in the home CDN.

The method proposed by the present invention aims to reduce and simplify inefficiencies in resource consumption across multiple disparate home devices. Such capability can be a unique differentiator for operators which provide connectivity capabilities. CDN is already a mainstream though works in the configuration of a client-server with rigid server farms, controlled by the CDN operator. The present invention transforms the CDN concept into the home landscape, while focusing on security, availability and convenience of use.

The present invention implements a kind of "GreenWeb" system, which reduces the internet consumption wastage by seamlessly adding sharing capabilities to the devices used by a family at home, to obtain a much faster internet experience while at the same time, reducing the bandwidth consumption and carbon emission footprint.

The present invention implements a privacy-preserving sharing mechanism that operates as follows:
At the first step, the basic functionality of devices of family members is identified, and their authenticity is verified. Then, a connection among trusted devices associated under a single WIFI network, is created. Therefore, if users are not at home, their device acts the same as before.

Once a family group of devices is formed, every time the system detects that someone has downloaded a new or an updated file to his device from the internet, the system immediately shares the downloaded data with other devices in the family network. This way, when other users will require downloading the same file in the future, they will be able to use the shared file, without requiring a real download from the internet.

In order to keep a high level of privacy, resources which contain private information are not shared. Also, resources which are unique to a single family member are not shared. So, if a member is browsing a website that no one else in the family has browsed it before, the files downloaded from that website will be kept only on the device of that member, and will not be shared with anyone else.

### Example:

A father comes home after work and connects into the Olympics website (*olympics.com*), to get updates on the recent developments. By a simple click, around 200 files are downloaded to his device, so he can enjoy the Olympics website using his device. An hour later, his daughter, who is also catching up on the Olympics statistics, clicks on her browser and goes into *olympics.com.* Now, the daughter's device already has 180 files out of the 200 that have been updated, since GreenWeb copied the updated files from the father's device to the daughter's device an hour before. So now, her device downloads only 20 updated files out of the 200 which have changed since her father downloaded them. This sharing resulted in 10X improvement in browsing speed and, of course, in 10X savings in carbon emissions.

The "GreenWeb" system provided by the present invention may be realized and integrated into all popular browsers so the impact on climate change will be meaningful, along with increasing the internet speed without paying more to any internet provider.

The"GreenWeb" system is established on a computerized device (such as a server) with at least one processor, according to the following steps. At the first step, a resilient and trusted ad-hoc Peer-To-Peer (P2P) communication protocol is implemented (P2P - a network in which interconnected nodes ("peers") share resources amongst each other without the use of a centralized administrative system) across smartphones, tablets and PCs, while utilizing the WIFI capabilities of the devices.

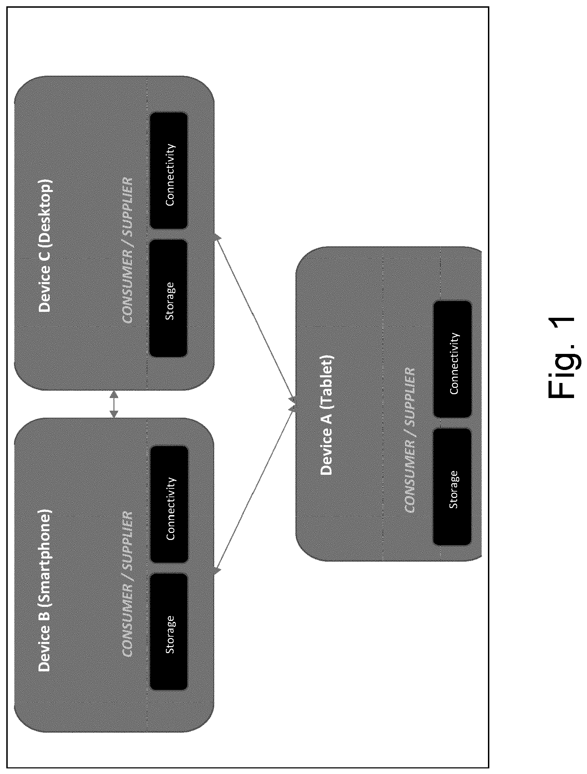

Fig. 1 shows an example of an ad-hoc Peer-To-Peer (P2P) network that comprises a tablet (device A), a smartphone (device B) and a desktop computer (device C), each having storage and connectivity capabilities and functioning both as a consumer and a customer for sharing browsed content.

At the next step, internet consumption experience is optimized across browser based sessions while considering usage of standalone browsers, or browsers' modules utilized by native applications (executable programs written for the operating system and hardware that it runs in). At the next step, browser cache assets of participating devices are replicated, based on usage patterns and top internet destinations while maintaining privacy. At the next step, shared cache assets are refreshed in idle times, in order to utilize bandwidth across the ad-hoc group. At the next step, internet experience optimization ratio is measured over a long period of time by monitoring the performance of devices participating in Home CDN vs. the devices that are not in a local network. At the next step, internet experience optimization ratio is measured across multiple local networks setups.

The "GreenWeb" system operates under the following assumptions:
- There are multiple devices on a local network: desktop computers, laptop computers, smartphones, and tablets.
- At every point in time, each device has different storage and bandwidth capabilities.
- All devices share similar software stacks (a software stack is a collection of independent components that work together to support the execution of an application. The components, which may include an operating system, architectural layers, protocols, runtime environments, databases and function calls, are stacked one on top of each other in a hierarchy).
- Devices can form ad-hoc groups over local networks.
- Devices act both as suppliers and consumers of resources at the same time.
- Users within a certain locality can share common media assets downloaded from the internet.

The "GreenWeb" system comprises the following device-level components, which are on a computerized device (such as a server) with at least one processor:
A Discovery Component, which continuously monitors the WIFI networking, searching for known and new devices and considering them for the suitability to join the ad-hoc network. For known devices that currently are not in the network, the Discovery Component triggers a handshake protocol for verifying the trust of the device via Trusted Device Verification. Once a known device joins the network, distributed tasks of assets discovery, refreshing and replication are initiated. For an unknown device, probing is done to verify whether the GreenWeb agent software is running on that device and if it is, the Discovery Component triggers the process of new device trust verification, where users in the network need to approve the device at some ratio of consent.

A Trusted Device Verification Component, which records, in a distributed manner, the list of trusted devices and their media access control (MAC) addresses (A MAC address is a unique identifier assigned to a network interface controller for use as a network address in communications within a network segment), as an ID. The Trusted Device Verification performs two major tasks: (a) verifying the trust of a known node in the network (b) entering a new node into the trusted group. The Trusted Device Verification component allows a User experience (UX) capability to manage the list of trusted devices, as well as managing blacklists. The trusted device verification module also manages the live list of nodes that are connected at a certain point in time, the history of devices that were forming groups in the past, exceptions that occur of devices that were rejected and gained trust.

A Quality of Service Monitoring Component, which is adapted to continuously run and monitor the local connectivity and storage patterns and act as an input source for different tasks in the system that require quality of service-based decisions, such as where to run the distributed task of cache refresh. The Quality of Service Monitoring component records the historic performance of the resources, as well as the hit/miss ratio on the caches (A hit ratio is a calculation of cache hits, and comparing them with how many total content requests were received. A miss ratio is the flip side of this where the cache misses are calculated and compared with the total number of content requests that were received), in order to evaluate the performance impact on the consumer internet experience.

A Distributed Task Scheduler Component, which is a plain distributed task scheduler that can manage nodes of execution across different compute environment and can schedule, execute and monitor standalone tasks across one or more nodes. The main logic of this component is based on Deep Reinforcement Learning (DRL - a subfield of machine learning that combines reinforcement learning and deep learning. Reinforcement learning considers the problem of a computational agent learning to make decisions by trial and error. Deep reinforcement learning incorporates deep learning into the solution, allowing agents to make decisions from unstructured input data without manual engineering of the state space) that is able to autonomously learn the best resource allocation given a predefined policy that may include different QoS requirements, privacy requirements, available resources, predicted content consumption, etc.

The "GreenWeb" system comprises the following system-level components:
A Top Sites and Usage based Assets Discovery component, which maintains an index of media assets that are shared across different devices, as well as media assets belonging to a list of top 1000 websites. The Top Sites and Usage based Assets Discovery component maintains device privacy by discarding assets that are unique to a specific device or assets protected by authentication schemes. The Top Sites and Usage based Assets Discovery component maintains the index as a distributed list available and in sync across the devices and a distributed task is triggered, based on a timetable or changes in the caching folder of one of the devices. The distributed task is responsible for updating the index and replicating it across the devices.

An Intelligent Cache Refresher and Replicator component that includes a set of distributed tasks which handle selective cache assets refreshed from the internet, as well as selective cache assets replication across the devices. A distributed task is triggered upon detecting a change in the assets index, while considering the level of connectivity and load constraints of specific devices that are destined to execute the distributed task.

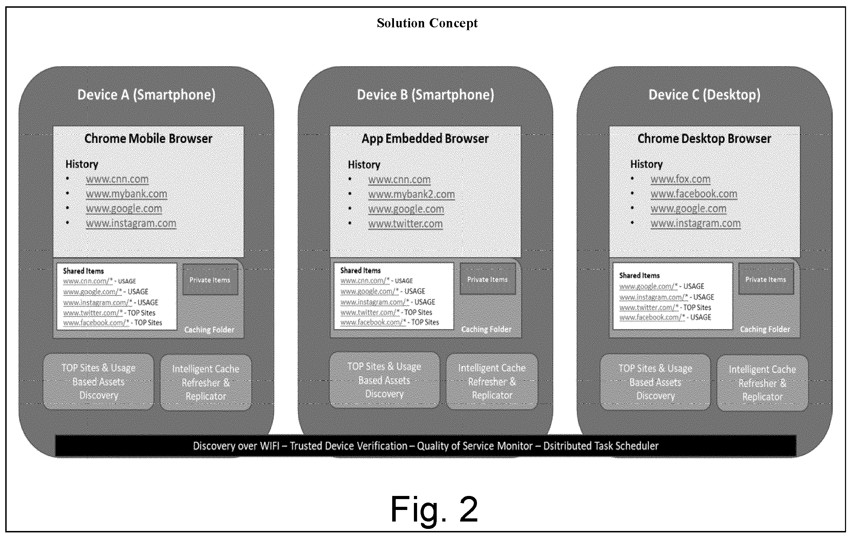

Fig. 2 illustrates the items shared by the connected devices of Fig. 1. Device A is a tablet that runs a Chrome mobile browser, where the caching folder comprises several shared items from the visited websites www.cnn.com, www.google.com, www.instagram.com, www.twitter.com and www.facebook.com. Device B is a smartphone that runs an application embedded browser, where the caching folder comprises several shared items from the visited websites www.cnn.com, www.google.com, www.instagram.com, www.twitter.com and www.facebook.com. Device C is a desktop computer that runs an application embedded browser, where the caching folder comprises several shared items from the visited websites www.google.com, www.instagram.com, www.twitter.com and www.facebook.com.

The "GreenWeb" system provides several advantages, such as cost saving. It is estimated that it costs an ISP around $10 to transmit 50GB of data. Accordingly, the ability to reduce unnecessary traffic would lead to potentially a significant cost saving. Another advantage is carbon footprint reduction. It is estimated that that internet usage in 2022 internet use will result in the consumption of 54.7 kWh of electricity and the emission of 15.36 kg of CO2 per person in annual terms [6].

Another advantage is the customer experience, which is provided to the customer seamlessly. Once the "GreenWeb" system is integrated into the popular browsers, the home users will not have to install or configure anything. Before integration, the system can be added to the browser as a plugin.

Therefore, with the "GreenWeb" system, home users are expected to experience a significant improvement in the speed of browsing, due to home-local caching of heavy objects.

The above examples and description have of course been provided only for the purpose of illustration. As will be appreciated by the skilled person, the invention can be carried out in a great variety of ways, employing more than one technique from those described above, all without exceeding the scope of the invention.

### REFERENCES

[1] Tyler Cooper, "How Much Does Data Really Cost an ISP?," Phil. https://broadbandnow.com/report/much-data-really-cost-isps/
[2] D. J. Leith, "Web Browser Privacy: What Do Browsers Say When They Phone Home?," in IEEE Access, vol. 9, pp. 41615-41627, 2021, doi: 10.1109/ACCESS.2021.3065243.
[3] How Much Bandwidth Does Your Home Really Need? https://www.consolidated.com/blog/residential/artmid/7943/articleid/ 84/how-much-bandwidth-does-your-home-really-need
[4] OECD broadband statistics update https://www.oecd.org/digital/broadband-statistics-update.htm
[5] https://www.euromonitor.com/germany/country-factfile ; https://www.statista.com/statistics/377677/household-internet-accesshttps://www.statista.com/statistics/377677/household-internet-access-in-germany/in-germany/
[6] https://www.energuide.be/en/questions-answers/do-i-emit-co2-whenhttps://www.energuide.be/en/questions-answers/do-i-emit-co2-when-i-surf-the-internet/69/i-surf-the-internet/69/
[7] https://www.cmswire.com/digital-experience/calculating-thehttps://www.cmswire.com/digital-experience/calculating-the-pollution-effect-of-data/pollution-effect-of-data/
[8] Manhas, Dr. (2013). A Study of Factors Affecting Websites Page Loading Speed for Efficient Web Performance. International Journal of Computer Sciences and Engineering.
[9] Microsoft research, "Silo: Exploiting JavaScript and DOM Storage for Faster Page Loads" C. *Related work*
[10] DRAP: A decentralized public resourced cloudlet for adhoc networks
[11] https://ruor.uottawa.ca/bitstream/10393/30682/1/Agarw al_Radhika_2014_thesis.pdf
[12] Aura: An incentive-driven ad-hoc loT cloud framework for proximal mobile computation offloading https://www.researchgate.net/publication/321733661_A ura_An_incentive-driven_adhttps://www.researchgate.net/publication/321733661_Aura_An incentive-driven ad-hoc_IoT_cloud_framework_for_proximal_mobile_computation_offloadinghoc_IoT_cloud_framework_ for_proximal_mobile_com putation_offloading
[13] Ad Hoc Cloud as a Service: A protocol for setting up an
[14] Ad hoc Cloud over MANETs
[15] https://core.ac.uk/download/pdf/82118164.pdf
[16] Volkfi
[17] https://volkfi.com/
[18] Enhancing the storage of mobile nodes through ad hoc storage as a service in MANETs
[19] https://onlinelibrary.wiley.com/doi/10.1002/dac.4297

## Claims

1. A method carried out by a computerized device for on demand matching between unused supplier resources and consumers, comprising:
a) establishing a single local WiFi network, by creating a connection among trusted devices (A, B, C) with a resilient and trusted ad-hoc Peer-To-Peer, P2P, communication protocol across connected device nodes for sharing browsed content among an ad-hoc group of connected devices, using WiFi networking capabilities of said connected devices;
b) optimizing internet consumption across browser based sessions while considering usage of standalone browsers, or browser modules utilized by native applications;
c) replicating browser cache assets of participating trusted devices (A, B, C), based on usage patterns and top internet destinations;
d) refreshing browser shared cache assets in idle time for utilizing bandwidth across said ad hoc group;
e) measuring internet experience optimization ratio over a predetermined period of time by monitoring the performance of devices participating in Home CDN vs. the devices that are not connected to the local network; and
f) measuring internet experience optimization ratio across multiple local networks setups,
**characterized in that** the browser cache assets of the participating trusted devices (A, B, C) are replicated by being additionally based an amount of energy left on each of the participating devices, whether each of the participating devices is in a charging mode or is continuously connected to an outlet, and a minimum required number of participating devices for maintaining availability and redundancy of a replicating operation.

2. A method according to claim 1, wherein the connected devices (A, B, C) are selected from the group of:
- smartphones;
- tablets;
- PCs.

3. A method according to claim 1, wherein each of the participating devices (A, B, C) acts according to an identified functionality without sharing browsed content if a user is not at home.

4. A method according to claim 1, wherein the connected devices (A, B, C) associated with the single WIFI network are used by family members forming a family group of the devices, and wherein a file downloaded on one of the devices will not be shared with other family members if no one else in the family has browsed a website before from which the file was downloaded.

5. A data processing system comprising a processor for on demand matching between unused suppliers resources and consumers which is adapted to perform the steps of the method of claim 1.

6. A system according to claim 5, comprising:
a) a discovery component installed on said computerized device having at least one processor, adapted to:
a.1) continuously monitor WiFi networking and searching for known and new devices (A, B, C) and consider said devices for suitability to join the local network;
a.2) for known devices that currently are not in the local network, trigger a handshake protocol for verifying the trust of the device via Trusted Device Verification;
a.3) upon detecting that a known device joins the local network, initiating refreshing and replication of distributed tasks of assets discovery;
a.4) probe for an unknown device to verify whether an agent software is running on said device and if it is, trigger a process of new device trust verification, where users in the local network need to approve the device;
b) a Trusted Device Verification Component, installed on said computerized device and being adapted to:
b.1) record a list of trusted devices that have joined the local network and their MAC addresses, as an ID;
b.2) verify the trust of a known node in the local network entering a new node into the trusted group;
b.3) allow a UX capability to manage the list of trusted devices and blacklists;
b.4) manage a live list of nodes that are connected at a certain point in time, a history of devices that were forming groups in the past, and exceptions that occur of devices that were rejected and gained trust;
c) a Quality of Service Monitoring Component, installed on said computerized device, which is adapted to:
c.1) continuously run and monitor local connectivity and storage patterns of the local network and act as an input source for different tasks that require quality of service-based decisions;
c.2) record a historic performance of resources, as well as a hit/miss ratio on the browser cache assets, for evaluating performance impact on a consumer internet experience; and
d) a Distributed Task Scheduler Component, installed on said computerized device, being a plain distributed task scheduler based on Deep Reinforcement Learning (DRL) that is adapted to:
d.1) manage the nodes across different computing environments;
d.2) schedule, execute and monitor the tasks across one or more nodes;
d.3) autonomously learn the best resource allocation given the predefined policy that includes different QoS requirements, privacy requirements, available resources, and predicted content consumption.

7. A system according to claim 6, further comprising:
a) a Top Sites and Usage based Assets Discovery component, installed on said computerized device, which is adapted to:
a.1) maintain an index of media assets that are shared across different devices (A, B, C), as well as media assets belonging to a list of top websites;
a.2) maintain device privacy by discarding assets that are unique to a specific device or assets protected by authentication schemes;
a.3) maintain the index as a distributed list available and in sync across the devices;
a.4) trigger a distributed task, based on a timetable or changes in the caching folder of one of the devices;
b) a Cache Refresher and Replicator component, installed on said computerized device, that includes a set of distributed tasks and is adapted to:
b.1) handle selective cache assets refreshed from the internet;
b.2) handle selective cache assets replication across the devices;
b.3) trigger distributed task upon detecting a change in the assets index, while considering the level of connectivity and load constraints of specific devices that are destined to execute the distributed task.

8. A computer program product, comprising instructions which, when the program is executed by a computer, cause the computer to carry out the method of claim 1.

## Patentansprüche

1. Verfahren, das von einer computergestützten Vorrichtung durchgeführt wird, zur bedarfsgerechten Abstimmung zwischen ungenutzten Anbieterressourcen und Verbrauchern, umfassend:
a) Aufbauen eines einzelnen lokalen WiFi-Netzwerks durch Herstellen einer Verbindung zwischen vertrauenswürdigen Vorrichtungen (A, B, C) mit einem robusten und vertrauenswürdigen Ad-hoc Peer-to-Peer-, P2P-, Kommunikationsprotokoll, über verbundene Vorrichtungsknoten zum Teilen von durchsuchtem Inhalt zwischen einer Ad-hoc-Gruppe von verbundenen Vorrichtungen unter Verwendung von WiFi-Netzwerkfähigkeiten der verbundenen Vorrichtungen;
b) Optimieren des Internetbedarfs über browserbasierte Sitzungen unter Berücksichtigung der Nutzung von eigenständigen Browsern oder Browsermodulen, die von nativen Anwendungen genutzt werden;
c) Replizieren von Browser-Cache-Assets teilnehmender vertrauenswürdiger Vorrichtungen (A, B, C) basierend auf Nutzungsmustern und Top-Internetzielen;
d) Aktualisieren von gemeinsam genutzten Browser-Cache-Assets in der Leerlaufzeit zur Nutzung von Bandbreite über die Ad-hoc-Gruppe;
e) Messen eines Interneterlebnis-Optimierungsverhältnisses über einen vorbestimmten Zeitraum durch Überwachen der Leistung von Vorrichtungen, die an Home-CDN teilnehmen, im Vergleich zu den Vorrichtungen, die nicht mit dem lokalen Netzwerk verbunden sind; und
f) Messen des Interneterlebnis-Optimierungsverhältnisses über Setups mehrerer lokaler Netzwerke,
**dadurch gekennzeichnet, dass** die Browser-Cache-Assets der teilnehmenden vertrauenswürdigen Vorrichtungen (A, B, C) repliziert werden zusätzlich basierend auf einer Menge Energie, die auf jeder der teilnehmenden Vorrichtungen verbleibt, ob sich jede der teilnehmenden Vorrichtungen in einem Lademodus befindet oder kontinuierlich an eine Steckdose angeschlossen ist, und einer minimal erforderlichen Anzahl von teilnehmenden Vorrichtungen zum Aufrechterhalten der Verfügbarkeit und Redundanz einer Replikationsoperation.

2. Verfahren nach Anspruch 1, wobei die verbundenen Vorrichtungen (A, B, C) ausgewählt werden aus der Gruppe von:
- Smartphones;
- Tablets;
- PCs.

3. Verfahren nach Anspruch 1, wobei jede der teilnehmenden Vorrichtungen (A, B, C) gemäß einer identifizierten Funktionalität agiert, ohne gebrowsten Inhalt zu teilen, wenn sich ein Nutzer nicht zu Hause befindet.

4. Verfahren nach Anspruch 1, wobei die verbundenen Vorrichtungen (A, B, C), die mit dem einzelnen WIFI-Netzwerk assoziiert sind, von Familienmitgliedern verwendet werden, die eine Familiengruppe der Vorrichtungen bilden, und wobei eine auf eine der Vorrichtungen heruntergeladene Datei nicht mit anderen Familienmitgliedern geteilt wird, wenn niemand anderes in der Familie zuvor eine Website gebrowst hat, von der die Datei heruntergeladen wurde.

5. Datenverarbeitungssystem, umfassend einen Prozessor zur bedarfsgerechten Abstimmung zwischen ungenutzten Anbieterressourcen und Verbrauchern, der dazu ausgelegt ist, die Schritte des Verfahrens nach Anspruch 1 auszuführen.

6. System nach Anspruch 5, umfassend:
a) eine Erkennungskomponente, die auf der computergestützten Vorrichtung installiert ist und mindestens einen Prozessor aufweist, der ausgelegt ist zum:
a.1) kontinuierlichen Überwachen der WiFi-Netzwerke und Suchen nach bekannten und neuen Vorrichtungen (A, B, C) und Prüfen der Vorrichtungen auf ihre Eignung zu dem lokalen Netzwerk beizutreten;
a.2) für bekannte Vorrichtungen, die sich gegenwärtig nicht in dem lokalen Netzwerk befinden, Auslösen eines Handshake-Protokolls zum Verifizieren der Vertrauenswürdigkeit der Vorrichtung mittels Trusted-Device-Verification;
a.3) bei Erkennen, dass eine bekannte Vorrichtung dem lokalen Netzwerk beitritt, Initiieren von Aktualisierung und Replikation verteilter Aufgaben der Asset-Erkennung;
a.4) Suchen nach einer unbekannten Vorrichtung, um zu verifizieren, ob eine Agentensoftware auf der Vorrichtung ausgeführt wird, und, wenn dies der Fall ist, Auslösen eines neuen Vertrauenswürdigkeits-Verifizierungsprozesses der Vorrichtung, in dem Nutzer in dem lokalen Netzwerk die Vorrichtung genehmigen müssen;
b) eine Trusted-Device-Verification-Komponente, die auf der computergestützten Vorrichtung installiert ist und ausgelegt ist zum:
b.1) Aufzeichnen einer Liste vertrauenswürdiger Vorrichtungen, die dem lokalen Netzwerk beigetreten sind, und deren MAC-Adressen als ID;
b.2) Verifizieren der Vertrauenswürdigkeit eines bekannten Knotens in dem lokalen Netzwerk und Aufnehmen eines neuen Knotens in die vertrauenswürdige Gruppe;
b.3) Ermöglichen einer UX-Fähigkeit, die Liste vertrauenswürdiger Vorrichtungen und schwarze Listen zu verwalten;
b.4) Verwalten einer Live-Liste von Knoten, die zu einem bestimmten Zeitpunkt verbunden sind, einer Historie von Vorrichtungen, die in der Vergangenheit Gruppen bildeten, und von Ausnahmen, die bei Vorrichtungen auftreten, die abgelehnt wurden und Vertrauen gewonnen haben;
c) eine Quality-of-Service-Überwachungskomponente, die auf der computergestützten Vorrichtung installiert ist und ausgelegt ist zum:
c.1) kontinuierlichen Ausführen und Überwachen lokaler Konnektivitäts- und Speichermuster des lokalen Netzwerks und Agieren als Eingabequelle für verschiedene Aufgaben, die Quality-of-Service-basierende Entscheidungen erfordern;
c.2) Aufzeichnen einer historischen Leistung von Ressourcen sowie eines Treffer/Fehler-Verhältnisses in den Browser-Cache-Assets, um die Auswirkungen der Leistung auf ein Interneterlebnis des Verbrauchers zu bewerten; und
d) eine Komponente zur Planung verteilter Aufgaben, die auf der computergestützten Vorrichtung installiert ist und bei der es sich um einen einfachen Planer verteilter Aufgaben basierend auf Deep Reinforcement Learning (DRL) handelt, der ausgelegt ist zum:
d.1) Verwalten der Knoten über verschiedene Computerumgebungen;
d.2) Planen, Ausführen und Überwachen der Aufgaben über einen oder mehrere Knoten;
d.3) autonomen Erlernen der besten Ressourcenzuweisung angesichts der vordefinierten Richtlinie, die verschiedene QoS-Anforderungen, Datenschutzanforderungen, verfügbare Ressourcen und vorhergesagten Inhaltsverbrauch umfasst.

7. System nach Anspruch 6, ferner umfassend:
a) eine Top-Sites- und nutzungsbasierte Asset-Erkennungskomponente, die auf der computergestützten Vorrichtung installiert ist und ausgelegt ist zum:
a.1) Führen eines Index von Medien-Assets, die auf verschiedenen Vorrichtungen (A, B, C) geteilt werden, sowie von Medien-Assets, die zu einer Liste von Top-Webseiten gehören;
a.2) Wahren der Privatsphäre der Vorrichtungen, indem Assets, die für eine spezifische Vorrichtung einzigartig sind, oder Assets, die durch Authentifizierungsschemata geschützt sind, verworfen werden;
a.3) Führen des Index als verteilte Liste, die über die Vorrichtungen verfügbar und synchronisiert ist;
a.4) Auslösen einer verteilten Aufgabe basierend auf einem Zeitplan oder Änderungen im Cache-Ordner einer der Vorrichtungen;
b) eine Cache-Aktualisierungs- und Replikationskomponente, die auf der computergestützten Vorrichtung installiert ist, die einen Satz verteilter Aufgaben umfasst und ausgelegt ist zum:
b.1) Handhaben selektiver Cache-Assets, die aus dem Internet aktualisiert wurden;
b.2) Handhaben der Replikation selektiver Cache-Assets über die Vorrichtungen;
b.3) Auslösen von verteilter Aufgabe bei Erkennen einer Änderung im Asset-Index unter Berücksichtigung des Konnektivitätsgrads und der Lastbeschränkungen spezifischer Vorrichtungen, die bestimmt sind, um die verteilte Aufgabe auszuführen.

8. Computerprogrammprodukt, das Anweisungen umfasst, die, wenn das Programm von einem Computer ausgeführt wird, den Computer veranlassen, das Verfahren nach Anspruch 1 durchzuführen.

## Revendications

1. Procédé exécuté par un dispositif informatique pour la mise en correspondance à la demande entre des ressources de fournisseur inutilisées et des consommateurs, comprenant les étapes suivantes :
a) établir un réseau Wi-Fi local simple, en créant une connexion parmi des dispositifs sécurisés (A, B, C) avec un protocole de communication pair à pair, ou P2P, *ad hoc* résilient et sécurisé entre des nœuds de dispositif connectés pour partager un contenu parcouru parmi un groupe *ad hoc* de dispositifs connectés, en utilisant les capacités de mise en réseau Wi-Fi desdits dispositifs connectés ;
b) optimiser la consommation internet dans des sessions basées sur un navigateur en prenant en compte l'utilisation de navigateurs autonomes, ou de modules de navigateur utilisés par des applications natives ;
c) reproduire des actifs de cache de navigateur de dispositifs sécurisés participants (A, B, C), en se basant sur des modes d'utilisation et sur les meilleures destinations internet ;
d) rafraîchir les actifs de cache partagé de navigateur en temps mort pour exploiter la bande passante dans ledit groupe *ad hoc* ;
e) mesurer le rapport d'optimisation de l'expérience internet sur un intervalle de temps prédéterminé en surveillant les performances des dispositifs participant à un RDC domestique, comparés aux dispositifs qui ne sont pas connectés au réseau local ; et
f) mesurer le rapport d'optimisation de l'expérience internet sur plusieurs configurations de réseaux locaux,
**caractérisé en ce que** les actifs de cache de navigateur des dispositifs sécurisés participants (A, B, C) sont reproduits en étant en outre basés sur une quantité d'énergie restante sur chacun des dispositifs participants, que le dispositif participant soit dans un mode de charge ou qu'il soit connecté de façon continue à une prise, et sur un nombre requis minimum de dispositifs participants pour maintenir la disponibilité et la redondance d'une opération de reproduction.

2. Procédé selon la revendication 1, dans lequel les dispositifs connectés (A, B, C) sont choisis dans le groupe comprenant :
- mobiles multifonction ;
- tablettes ;
- ordinateurs personnels.

3. Procédé selon la revendication 1, dans lequel chacun des dispositifs participants (A, B, C) agit selon une fonctionnalité identifiée sans partager de contenu parcouru si un utilisateur ne se trouve pas chez lui.

4. Procédé selon la revendication 1, dans lequel les dispositifs connectés (A, B, C) associés au réseau Wi-Fi simple sont utilisés par des membres de famille formant un groupe de famille des dispositifs, et dans lequel un fichier téléchargé sur l'un des dispositifs ne sera pas partagé avec les autres membres de la famille si personne d'autre dans la famille n'a parcouru un site à partir duquel le fichier a été téléchargé.

5. Système de traitement de données comprenant un processeur pour la mise en correspondance à la demande entre des ressources de fournisseur inutilisées et des consommateurs qui est adapté pour exécuter les étapes du procédé de la revendication 1.

6. Système selon la revendication 5, comprenant :
a) un composant de découverte installé sur ledit dispositif informatique comportant au moins un processeur, adapté pour :
a.1) surveiller en continu la mise en réseau Wi-Fi et rechercher les dispositifs connus et nouveaux (A, B, C) et évaluer la capacité desdits dispositifs à rejoindre le réseau local ;
a.2) pour les dispositifs connus qui ne sont pas présents dans le réseau local, déclencher un protocole d'établissement de connexion pour vérifier la sécurité du dispositif via une Vérification de Dispositif Sécurisé ;
a.3) après avoir détecté qu'un dispositif connu rejoint le réseau local, lancer le rafraîchissement et la reproduction de tâches réparties de découverte d'actifs ;
a.4) sonder un dispositif inconnu pour vérifier si un logiciel agent fonctionne sur ledit dispositif et, le cas échéant, déclencher un processus de vérification de sécurité de nouveau dispositif, dans lequel les utilisateurs du réseau local doivent approuver ce dispositif ;
b) un Composant de Vérification de Dispositif Sécurisé, installé sur ledit dispositif informatique et qui est adapté pour :
b.1) enregistrer une liste de dispositifs sécurisés qui ont rejoint le réseau local et leurs adresses MAC comme identificateurs ;
b.2) vérifier la sécurité d'un nœud connu dans le réseau local en faisant entrer un nouveau nœud dans le groupe sécurisé ;
b.3) autoriser une capacité d'expérience utilisateur à gérer la liste de dispositifs sécurisés et des listes de rejet ;
b.4) gérer une liste courante de nœuds qui sont connectés à un certain moment, un historique des dispositifs qui formaient des groupes dans le passé, et les exceptions qui se produisent pour des dispositifs rejetés qui se sont sécurisés ;
c) un Composant de Surveillance de la Qualité de Service, installé sur ledit dispositif informatique, qui est adapté pour :
c.1) faire fonctionner et surveiller en continu la connectivité locale et les modes de stockage du réseau local et agir en tant que source d'entrée pour les différentes tâches qui nécessitent des décisions basées sur la qualité de service ;
c.2) enregistrer un historique des performances des ressources, ainsi qu'un rapport satisfaisant/insatisfaisant sur les actifs de cache de navigateur, pour évaluer l'impact des performances sur l'expérience internet d'un consommateur ; et
d) un Composant Planificateur de Tâches Réparties, installé sur ledit dispositif informatique, qui est un simple planificateur de tâches réparties basé sur l'apprentissage par renforcement profond (DRL) qui est adapté pour :
d.1) gérer les nœuds dans différents environnements de traitement ;
d.2) planifier, exécuter et surveiller les tâches sur un ou plusieurs nœuds ;
d.3) apprendre de manière autonome la meilleure allocation des ressources en fonction de la politique prédéfinie qui comprend les différentes exigences de qualité de service, les exigences de confidentialité, les ressources disponibles et la consommation de contenu prévue.

7. Système selon la revendication 6, comprenant en outre :
a) un composant de Découverte des Actifs basés sur les Meilleurs Sites et l'Utilisation, installé sur ledit dispositif informatique, qui est adapté pour :
a.1) maintenir un indice des actifs multimédias qui sont partagés entre différents dispositifs (A, B, C), ainsi que des actifs multimédias appartenant à une liste des meilleurs sites ;
a.2) maintenir la confidentialité des dispositifs en rejetant les actifs qui sont propres à un dispositif particulier ou les actifs protégés par des programmes d'authentification ;
a.3) maintenir l'indice sous forme d'une liste distribuée disponible et en synchronisation parmi les dispositifs ;
a.4) déclencher une tâche répartie, basée sur un tableau indicateur ou des changements dans le dossier de cache de l'un des dispositifs ;
b) un composant de Rafraîchissement et Reproduction de Cache, installé sur ledit dispositif informatique, qui comprend un ensemble de tâches réparties et est adapté pour :
b.1) gérer des actifs de cache choisis rafraîchis depuis internet ;
b.2) gérer une reproduction d'actifs de cache choisis parmi les dispositifs ;
b.3) déclencher une tâche répartie s'il est détecté un changement de l'indice des actifs, en prenant en compte le niveau de connectivité et les contraintes de charge de dispositifs particuliers qui sont destinés à exécuter la tâche répartie.

8. Produit de programme informatique, comprenant des instructions qui, lorsque le programme est exécuté par un ordinateur, font mettre en œuvre par l'ordinateur le procédé de la revendication 1.
